# EUROPÄISCHE PATENTSCHRIFT

(11) **EP 4 157 660 B1**
(45) Veröffentlichungstag und Bekanntmachung des Hinweises auf die Patenterteilung: **17.07.2024**
(21) Anmeldenummer: 21725456.4
(22) Anmeldetag: 06.05.2021
(51) Int. Cl.: B60J 5/04

(54) **PERSONENKRAFTWAGEN MIT VERBESSERTEM SEITENAUFPRALLSCHUTZ**
PASSENGER VEHICLE WITH IMPROVED SIDE IMPACT PROTECTION
VÉHICULE POUR PASSAGERS PRÉSENTANT UNE PROTECTION AMÉLIORÉE CONTRE LES CHOCS LATÉRAUX

(30) Priorität: 28.05.2020 DE 102020003194
(43) Veröffentlichungstag der Anmeldung: 05.04.2023
(73) Patentinhaber: Mercedes-Benz Group AG, 70372 Stuttgart (DE)
(72) Erfinder: DAUBITZ, Andre, 71083 Herrenberg (DE); DISSON, Arno, 71069 Sindelfingen (DE)
(74) Vertreter: Novagraaf Group
(86) Internationale Anmeldenummer: PCT/EP2021/061944
(87) Internationale Veröffentlichungsnummer: WO 2021/239427

(56) Entgegenhaltungen:
- FR-A1- 2 939 752
- JP-U- H0 353 309
- JP-U- S5 748 115
- US-A- 5 306 067

## Beschreibung

Die Erfindung betrifft einen Personenkraftwagen mit einem verbesserten Seitenaufprallschutz.

Die Anforderungen an Personenkraftwagen hinsichtlich eines verbesserten Aufprallschutzes, insbesondere des Seitenaufprallschutzes steigen, stetig an. Das heißt, dass trotz erhöhtem Energieeintrag in den Personenkraftwagen der Schutz der Insassen weiterhin sicherzustellen ist. Insbesondere bei einem Seitenaufprall mit erhöhter Geschwindigkeit und einer erhöhten Masse eines Personenkraftwagens, welches den Seitenunfall verursacht, besteht die Gefahr des Überziehens der Seitentür über den Seitenschweller des Personenkraftwagens, was zu erhöhten Intrusionen in den Fahrgastraum führt. Dabei können Türscharniere und ein Schloss der eingedrückten Seitentür versagen, insbesondere brechen, sodass diese aufspringen kann. Damit ist der Kraftwageninnenraum im Crashfall offen. Arme und Beine der Insassen können durch die Öffnung nach außen und Gegenstände in den Innenraum gelangen, was während des Unfallgeschehens die Verletzungsgefahr für die Insassen erhöht.

Aus der DE 10 2011 101 533 A1 geht eine Seitentür eines Personenkraftwagens hervor, welche in ihrem Türbodenbereich - bezogen auf eine Schließstellung in Kraftwagenquerrichtung gesehen - in zumindest bereichsweiser Überdeckung mit einem eine Türöffnung der Karosserie begrenzenden Seitenschweller angeordnet ist. In diesem Bereich weist die Seitentür ein Verstärkungselement auf, das bei einem Seitenaufprall die Seitentür, insbesondere in dem Überdeckungsbereich, an dem Seitenschweller bei einer zumindest im Wesentlichen in Kraftwagenquerrichtung verlaufenden und von außen nach innen auf die Seitentür wirkenden, unfallbedingten Kraftbeaufschlagung gegen den Seitenschweller verlagert wird und sich schließlich an diesem unter Ausbildung eines Formschlusses verhakt oder verkeilt, wodurch ein Überziehen der Seitentür über den Seitenschweller verhindert wird beziehungsweise auf ein gewisses Maß reduzierbar ist.

Die auf die Türscharniere und das Türschloss wirkenden Kräfte sind dabei jedoch noch sehr hoch, sodass die Gefahr eines Versagens nicht ausgeschlossen werden kann.

Aus der US 2015/0123427 A1 geht ein Kraftwagen mit einer Seitentür hervor, welche in einem Türbodenbereich mit einer Fangöse versehen ist, welche bei geschlossener Seitentür durch eine Öffnung in einem Seitenschweller in einen Hohlraum desselben hineinragt, in welchem ein Hakenelement vorgesehen ist. Im Falle einer Seitenkollision wird die Seitentür in Richtung eines Fahrgastraumes verformt, wobei aufgrund der Verformung der Seitentür das Hakenelement in Eingriff mit der Fangöse gelangt und so die Seitentür in einem unteren Bereich am Seitenschweller fixiert.

Aus der EP 0 642 940 B1 ist eine Seitentür eines Personenkraftwagens bekannt, wobei die Seitentür mit einem Verstärkungsprofil versehen ist, an dem am seitlichen Randbereich der Seitentür ein Fanghaken angeschraubt ist. Dessen Hakenabschnitt ist in Schließlage der Seitentür einer in einer Karosseriesäule ausgebildeten, muldenförmigen Ausnehmung zugeordnet, wobei das freie Ende des Hakenabschnitts etwa in der Ebene der zugewandten Außenseite der Karosseriesäule liegt. Bei einer gegen die Seitentür gerichteten Krafteinwirkung gleitet das freie Ende des Hakenabschnitts mit hoher Reibwirkung über die Außenseite der Karosseriesäule, wodurch schließlich eine wulstartige Erhöhung entstehen kann. Hierdurch wird die Eindringtiefe der Seitentür in dem Kraftwageninnenraum wesentlich vermindert. Die Fixierung beziehungsweise das Eingraben des Hakenabschnitts in die Karosseriesäule erfolgt allerdings in Kraftwagenlängsrichtung, das heißt in x-Richtung des Kraftwagenkoordinatensystems, und zwar nur in Vorwärtsfahrtrichtung, während bei einem Frontalanprall und einer damit einhergehenden Rückverlagerung der Seitentür der Hakenabschnitt aus der Vertiefung herausgleitet. Es verbleibt jedoch das Problem, dass die Seitentür während eines Seitenaufpralls über den Längsträger gezogen werden kann, wodurch die Gefahr eines Brechens von insbesondere dem Schloss der Seitentür besteht, wodurch die Seitentür nicht mehr sicher in Schließposition gehalten werden kann.

Aus der US 5 306 067 A geht ein Personenkraftwagen hervor, umfassend eine Karosserie und eine zwischen einer Schließstellung und einer Offenstellung bewegbare Seitentür, wobei an einem freien Randbereich der Seitentür ein Seitentürfixierelement angeordnet ist.

Der Erfindung liegt daher die Aufgabe zugrunde, einen Personenkraftwagen zu schaffen, bei dem ein verbesserter Seitenaufprallschutz ohne erheblichen Erhöhung des Gesamtgewichts des Personenkraftwagens erreicht wird.

Die Aufgabe wird gelöst, indem die vorliegende technische Lehre bereitgestellt wird, insbesondere die Lehre des unabhängigen Anspruchs sowie der in den abhängigen Ansprüchen und der Beschreibung offenbarten bevorzugten Ausführungsbeispiele.

Zur Lösung der Aufgabe wird ein Personenkraftwagen mit den Merkmalen des Anspruchs 1 vorgeschlagen. Dieser umfasst eine Karosserie und mindestens eine, zwischen einer Schließstellung und einer Offenstellung bewegbare, insbesondere schwenkbare Seitentür, wobei an einem freien Randbereich der mindestens einen Seitentür ein Seitentürfixierelement vorgesehen ist. Der Personenkraftwagen zeichnet sich dadurch aus, dass an einer tragenden Kraftwagensäule der Karosserie ein in Kraftwagenhochrichtung oberhalb des Seitentürfixierelements angeordnetes Karosserieanschlagelement vorgesehen, das bei in Schließstellung angeordneter Seitentür in Kraftwagenhochrichtung, als in z-Richtung des Kraftwagenkoordinatensystems, in einem Abstand vom Seitentürfixierelement angeordnet ist, dass das Seitentürfixierelement und das Karosserieanschlagelement in der Schließstellung der Seitentür einen Versatz in Kraftwagenquerrichtung relativ zueinander aufweisen und dass bei einer durch einen Anprall eines Kollisionspartners an die Seitentür bedingten Verformung derselben das Seitentürfixierelement gegen das Karosserieanschlagelement verlagert ist.

Aufgrund dieser Anordnung von Seitentürfixierelement gegenüber dem Karosserieanschlagelement kann die Seitentür geöffnet und geschlossen werden, ohne dass sich diese Elemente berühren. Bei einem Seitenaufprall auf die Seitentür stützt sich jedoch das Seitentürfixierelement am Karosserieanschlagelement ab, wodurch eine Verschiebung der Seitentür in Kraftwagenhochrichtung (z-Richtung) praktisch vermieden wird. Es findet allenfalls ein leichtes beziehungsweise geringfügiges Anheben der Seitentür infolge deren Intrusion, also Verformung in Richtung eines Fahrgastraumes des Personenkraftwagens statt, bis es zu einem Anschlagen des Seitentürfixierelements am karosserieseitigen Anschlagelement kommt. Somit wird ein weiteres Anheben der Seitentür in z-Richtung des Personenkraftwagens mittels des lediglich im Crashfall wirkenden, passiven Seitentürfixierelements verhindert. Festzuhalten bleibt, dass sich die Seitentür vorzugsweise ausschließlich in nur einer Richtung, nämlich der Kraftwagenhochrichtung (z-Richtung) an der Karosserie beziehungsweise einem daran vorgesehenen Anschlagelement abstützt und die anderen Bewegungsrichtungen der Seitentür, also in Kraftwagenlängsrichtung (x-Richtung) und Kraftwagenquerrichtung (y-Richtung) vorzugsweise nicht eingeschränkt werden. Besonders vorteilhaft an der erfindungsgemäßen Ausgestaltung ist, dass die Seitentür sich im Crashfall verformen kann. Damit werden eine Seitenwand der Karosserie, die Anbindungsteile der Seitentür an der Seitenwand, Scharniere und Schließbügel geschützt und die Türrohbauteile, insbesondere ein Türrahmen und daran angebrachte Verstärkungselemente und Profile, beispielsweise ein Seitenaufprallschutzprofil (SAPS-Profil) vorteilhafterweise auf Biegung beansprucht. So wird ein Reißen der Türscharniere, Schließbügel, der Türbauteile und der Schweiß- und/oder Klebeverbindungen im Türrohbau vermieden. Insgesamt kann zwar eine zumindest gewisse Intrusion der Seitentür nicht vermieden werden, jedoch ist aufgrund der erfindungsgemäßen Ausgestaltung der Seitentür beziehungsweise der Karosserie gewährleistet, dass im Crashfall viele Bauteile verformt werden und so möglichst viel Crashenergie abgebaut wird.

Vorteilhaft ist weiterhin, dass eine Überlastung eines Schlosses der Seitentür vermieden werden kann und somit ein Kraftverbund zwischen der Seitentür und der Karosserie des Personenkraftwagens erhalten bleibt.

Aufgrund der oben bereits beschriebenen Ausführung, nämlich, dass das Seitentürfixierelement und das Karosserieanschlagelement erst im Falle eines Unfalls in Kontakt gelangen, können die beiden Elemente einstellungslos ausgelegt werden und sind dadurch nicht geräuschrelevant.

Gemäß der Erfindung ist vorgesehen, dass das Karosserieanschlagelement in Kraftwagenhochrichtung oberhalb des Seitentürfixierelements angeordnet ist. Das heißt, dass auch bei unbeschädigter Seitentür in Schließstellung derselben bereits eine gewisse Überdeckung zwischen Seitentürfixierelement und Karosserieanschlagelement in Kraftwagenquerrichtung besteht. Damit ist sichergestellt, dass auch bei einer bereits relativ geringen Intrusion der Seitentür ein Anschlagen des Seitentürfixierelements am Karosserieanschlagelement gewährleistet ist und das Seitentürfixierelement keinesfalls am Karosserieanschlagelement in Kraftwagenhochrichtung vorbeigleiten kann.

Besonders bevorzugt wird weiterhin ein Ausführungsbeispiel, bei dem bei Verlagerung der unbeschädigten Seitentür zwischen ihrer Schließstellung und Offenstellung das Seitentürfixierelement das Karosserieanschlagelement berührungslos passiert. Das Seitentürfixierelement und das Karosserieanschlagelement weisen also zumindest in der Schließstellung der Seitentür einen Höhenversatz in Kraftwagenhochrichtung relativ zueinander auf.

Weiterhin wird ein Ausführungsbeispiel des Personenkraftwagens bevorzugt, das sich dadurch auszeichnet, dass bei einer durch einen Anprall eines Kollisionspartners an die Seitentür bedingten Verformung derselben das Seitentürfixierelement in Kraftwagenquerrichtung in Richtung auf einen Fahrgastraum gegen einen weiteren karosserieseitigen Anschlag verlagerbar ist. Dieser Anschlag kann beispielsweise ein Teil der Karosserieseitenwand und/oder eine Karosseriesäule sein. Auch bei dieser Ausgestaltung ist immer noch eine gewisse Relativbewegung der Seitentür in Kraftwagenlängsrichtung möglich.

Dadurch, dass das Seitentürfixierelement und das Karosserieanschlagelement in einer Betriebsstellung und/oder Geschlossenstellung der Seitentür einen Höhenversatz in Kraftwagenhochrichtung (z-Richtung) und einen Querversatz in Kraftwagenquerrichtung (y-Richtung) relativ zueinander aufweisen, wird insbesondere erzielt, dass in einem Normalbetrieb das Seitentürfixierelement und das Karosserieanschlagelement berührungslos aneinander vorbei geführt werden können, wenn die Seitentür geöffnet oder geschlossen wird.

Gemäß einer Weiterbildung der Erfindung ist vorgesehen, dass die Wirkverbindung zwischen Seitentürfixierelement und Karosserieanschlagelement nicht auf einem Zugverbund und/oder nicht auf einer formschlüssigen Wirkverbindung besteht. Hierdurch wird insbesondere verhindert, dass Bereiche und/oder Bauteile der Seitentür einer übermäßigen Belastung ausgesetzt sind, welche zu einer Zerstörung und/oder Schwächung einer Integrität der Seitentür führen könnten. Durch eine Verformung der Seitentür ist es insbesondere möglich, dass eine Energie eines Unfalls abgebaut werden kann und zudem wird eine übermäßige Verlagerung der Seitentür in Kraftwagenhochrichtung verhindert wird. Mit anderen Worten wird jedoch eine Verlagerung der Seitentür in andere Richtungen als die Kraftwagenhochrichtung nicht verhindert, wodurch es ermöglicht wird, dass insbesondere Anbindungsteile der Seitentür, wie das Schloss und die Scharniere, geschützt werden und die Seitentür lediglich auf Biegung beansprucht wird. Insofern kann vorteilhaft die Unfallenergie abgebaut werden. Zudem wird durch die Verformung der Seitentür die Belastung für Schweiß- und Klebeverbindungen eines Rohbaus der Seitentür vermindert.

Gemäß einer Weiterbildung der Erfindung ist vorgesehen, dass es sich bei dem Seitentürfixierelement und dem Karosserieanschlagelement um ein passives Fixierelement und Anschlagelement handelt. Hiermit wird insbesondere angesprochen, dass die Elemente bei einem Öffnen und/oder Schließen der Seitentür nicht ineinandergreifen oder zusammenwirken und auch im Crashfall nicht gesondert mittels eines Aktuators bewegt werden müssen.

Die tragende Kraftwagensäule der Karosserie, an der das Karosserieanschlagelement vorgesehen ist, kann beispielsweise eine A-Säule oder B-Säule oder C-Säule sein. Insbesondere die Säulen der Karosserie sind für die Einleitung von Kräften in Kraftwagenhochrichtung besonders geeignet.

Gemäß einer Weiterbildung der Erfindung ist vorgesehen, dass das Seitentürfixierelement an der Seitentür unten in Einbauposition der Seitentür angeordnet und entsprechend die korrespondierende Stelle an der Karosserie an einem Säulenfuß derA-Säule oder B-Säule oder C-Säule angeordnet ist. Insbesondere der Bereich des Säulenfußes einer Säule der Karosserie in Verbindung mit dem darauf angeordneten Seitenschweller ist besonders geeignet, Kräfte, insbesondere in Kraftwagenhochrichtung, aufzunehmen, ohne selbst in erheblichem Maße deformiert zu werden.

Gemäß einer Weiterbildung der Erfindung ist vorgesehen, dass das Seitentürfixierelement und/oder das Karosserieanschlagelement mittels Schrauben, Stiften und/oder Muttern fixiert ist, wobei vorzugsweise zur Erhöhung der Stabilität noch Verstärkungselemente vorgesehen sind, und wobei vorzugsweise bei einer mittels Blechbauweise hergestellten Seitentür Muttern zur Befestigung des Seitentürfixierelements an der Seitentür geschweißt und/oder geklebt sind und/oder bei einer aus Strangpressprofilen hergestellten Seitentür ein Kulissenstein mit Gewindebohrung, insbesondere quer, durch eine Bohrung in ein Strangpressprofil der Seitentür eingesetzt ist. Insbesondere in Verbindung mit den Verstärkungselementen sind das Seitentürelement und/oder das Karosserieanschlagelement derart stabil ausgebildet, dass auch die aktuell geforderten Kräfte ohne eine Deformation der Elemente in erheblichem Maße zu bewirken.

Gemäß einer Weiterbildung der Erfindung ist vorgesehen, dass das Karosserieanschlagelement als Scharnierelement, insbesondere unteres Scharnierelement, der Seitentür ausgebildet ist. Hierdurch wird insbesondere erreicht, dass keine weiteren Bauteile notwendig sind, weswegen besonders einfach und kostengünstig der erfindungsgemäße Effekt erzielt werden kann.

Die Erfindung wird im Folgenden anhand der Zeichnung näher erläutert. Dabei zeigen:
- Figur 1A: in einer schematischen Darstellung ein erstes Ausführungsbeispiel des Personenkraftwagens,
- Figur 1B: in einer schematischen Darstellung einen Querschnitt durch das erste Ausführungsbeispiel des Personenkraftwagens aus Figur 1A entlang der Schnittlinie A-A,
- Figur 1C: in einer schematischen Darstellung den Querschnitt durch das erste Ausführungsbeispiel gemäß Figur 1B, wobei die schematische Darstellung aus Figur 1C die Situation nach einem Unfall darstellt,
- Figur 2A: in einer schematischen Darstellung ein zweites Ausführungsbeispiel des Personenkraftwagens,
- Figur 2B: in einer schematischen Darstellung einen Querschnitt durch das zweite Ausführungsbeispiel gemäß Figur 2A entlang der Schnittlinie B-B,
- Figur 2C: in einer schematischen Darstellung den Querschnitt gemäß Figur 2B, wobei im Vergleich zu Figur 2B eine Unfallsituation gezeigt ist.

In den Figuren sind gleiche Teile mit gleichen Bezugszeichen versehen, sodass insofern auf die vorangegangene Beschreibung verwiesen wird.

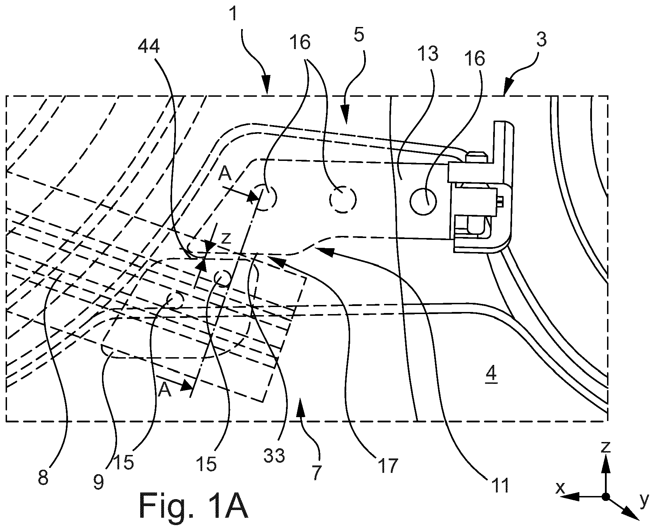

Der Figur 1A ist in einer schematischen Darstellung ein erstes Ausführungsbeispiel eines Personenkraftwagens 1 zu entnehmen, aufweisend eine Karosserie 3 und mindestens eine Seitentür 5. Von der Karosserie 3 ist lediglich ein Teil einer Karosseriesäule 4 zu erkennen, bei der es sich hier um eine sogenannte B-Säule handelt. In der Darstellung gemäß Figur 1A ist von der B-Säule lediglich deren Säulenfuß zu erkennen. Bei der Seitentür 5

handelt es sich hier um eine sogenannte Fronttür des bei diesem Ausführungsbeispiel vorzugsweise viertürigen Personenkraftwagens 1. Von der mit gestrichelter Linie umrandeten Fronttür ist lediglich deren hinterer unterer Eckbereich zu erkennen.

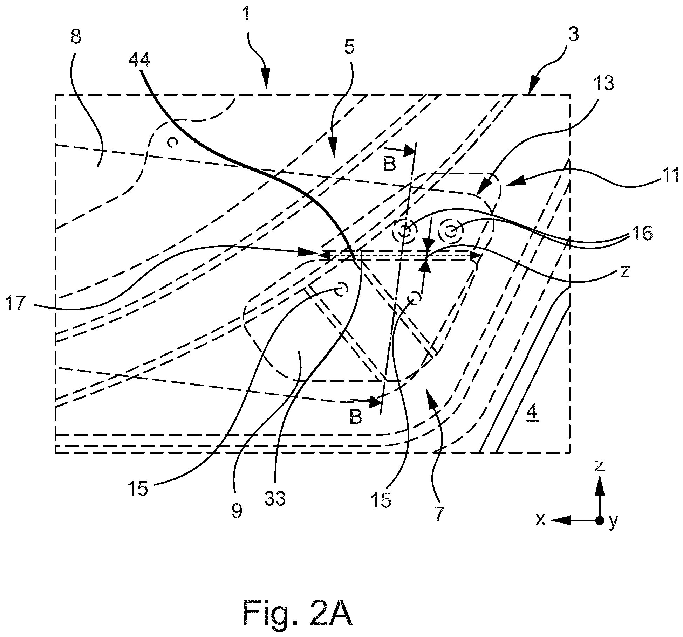

Demgegenüber zeigt Figur 2A einen Ausschnitt des Personenkraftwagens 1 gemäß Figur 1A oder eines anderen Personenkraftwagens im Bereich eines weiteren Ausführungsbeispiels der Seitentür 5, bei der es sich hier um eine Fondtür handelt, von der hier lediglich deren hinterer unterer Eckbereich zu erkennen ist. Demgemäß handelt es sich bei der Karosseriesäule 4 um eine sogenannte C-Säule, von der lediglich deren Säulenfuß zu erkennen ist. Der Personenkraftwagen 1 ist hier zumindest viertürig ausgebildet.

An einem freien Randbereich 7 der Seitentür 5 und zwar in deren hinteren unteren Eckbereich ist ein Seitentürfixierelement 9 angeordnet ist. Das Seitentürfixierelement 9 wirkt mit einem an einer zum Seitentürfixierelement 9 der Seitentür 5 korrespondierenden Stelle 11 der Karosserie 3 in Schließstellung der Seitentür 5 angeordneten Karosserieanschlagelement 13 derart zusammen, dass in einem Normalbetrieb der mindestens einen Seitentür 5 diese mit dem Seitentürfixierelement 9 ohne Berührung am Karosserieanschlagelement 13 der Karosserie 3 vorbei geöffnet und geschlossen werden kann, und in einer Unfallsituation durch eine Verformung, insbesondere Intrusion der Seitentür 5 in Richtung eines Fahrgastraums, also in Richtung in die Bildebene der Figuren 1A und 2A gesehen, sich das Seitentürfixierelement 9 an dem Karosserieanschlagelement 13 abstützt, sodass eine Verlagerung der Seitentür 5 in Kraftwagenhochrichtung (z-Richtung) weitgehend verhindert wird.

In Figur 1A ist noch ein Verstärkungselement 8 zu erkennen, welches auch als Seitenaufprallschutzprofil (SAPS-Profil) bezeichnet wird und zumindest in seinem hinteren Ende schräg nach unten in den Eckbereich der Seitentür 5 hinein verläuft. Dabei ist das Verstärkungselement 8 am Türrohbau, also dem Türtragstrukturrahmen angebunden. Dies erfolgt hier am oder nahe des Seitentürfixierelement 9.

Bei dem Ausführungsbeispiel gemäß Figur 1A ist das Karosserieanschlagelement 13 als beziehungsweise an einem Scharnierelement ausgebildet, insbesondere als unteres Scharnierelement, wobei das zur schwenkbeweglichen Lagerung einer in Figur 1A nicht dargestellten Fondtür des Personenkraftwagens 1 dient. Anders bei dem Ausführungsbeispiel gemäß Figur 2A, bei dem das Karosserieanschlagelement 13 als plattenförmiges Element, insbesondere Anschlagplatte ausgebildet ist, welche von außen auf die Karosseriesäule 4 aufgesetzt oder gegebenenfalls auch daran ausgebildet ist.

Ferner ist insbesondere den Figuren 1A und 2A zu entnehmen, dass das Seitentürfixierelement 9 und das Karosserieanschlagelement 13 in einer Betriebsstellung und/oder Geschlossenstellung der Seitentür 5 einen Höhenversatz 17 in Kraftwagenhochrichtung (z-Richtung) relativ zueinander aufweisen, sodass bei geschlossener Seitentür 5 ein Abstand beziehungsweise ein Spalt zwischen diesen mit der Höhe z besteht.

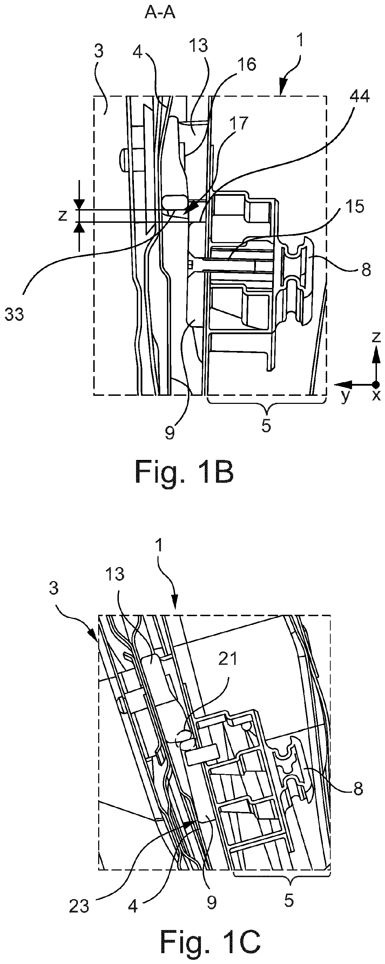

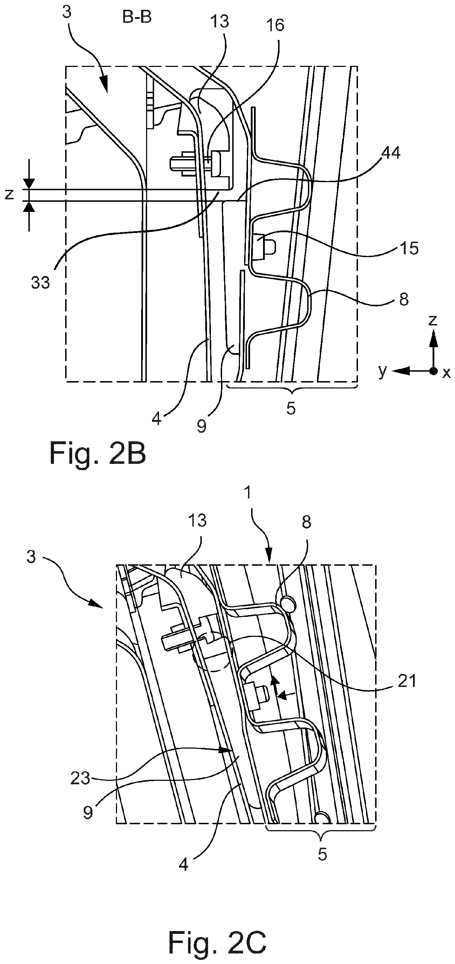

Darüber hinaus ist insbesondere den Figuren 1B und 2B zu entnehmen, dass das Seitentürfixierelement 9 und das Karosserieanschlagelement 13 in einer Betriebsstellung und/oder Geschlossenstellung einen Querversatz, das heißt einen Versatz in Kraftwagenquerrichtung (y-Richtung im Kraftwagenkoordinatensystem) relativ zueinander aufweisen. Dabei ist bei dem Ausführungsbeispiel gemäß Figur 1B vorgesehen, dass der y-Versatz des Seitentürfixierelements 9 so groß ist, dass bei geschlossener Seitentür 5 keine Überdeckung in z-Richtung, das heißt also nach oben zwischen diesem und dem Karosserieanschlagelement 13 besteht. Anders bei dem Ausführungsbeispiel gemäß Figur 2B, bei dem das Seitentürfixierelements 9 bei geschlossener Seitentür 5 bereits in geringer Überdeckung in z-Richtung mit dem Karosserieanschlagelement 13 angeordnet ist. Beiden Ausführungsbeispielen ist gemeinsam, dass das Seitentürfixierelement 9 in einem Abstand von der Karosserie 3 beziehungsweise deren Karosseriesäule 4 angeordnet sind, dort also nicht anschlagen.

Ferner ist in den Figuren 1A sowie 2A die Seitentür 5 jeweils schraffiert gezeigt, da sonst die geometrisch bezüglich der Bildebene darunterliegenden Bauteile, wie Seitentürfixierelement 9 oder das Karosserieanschlagelement 13 durch die Seitentür 5 verdeckt wären.

Insbesondere ist den Figuren 1A, 1B und 2B zu entnehmen, dass das Seitentürfixierelement 9 und das Karosserieanschlagelement 13 mittels Schrauben, Stiften und/oder Muttern 15 beziehungsweise 16 lagefest an der Seitentür beziehungsweise der Karosserie 3 fixiert sind. Dabei sind vorzugsweise bei einer mittels blechbauweise hergestellten Seitentür 5 Muttern zur Befestigung des Seitentürfixierelements 9 an der Seitentür 5 geschweißt und/oder geklebt. Bei einer aus Strangpressprofilen hergestellten Seitentür 5 ist vorzugsweise ein Kulissenstein (in den Figuren nicht gezeigt) mit Gewindebohrung (in den Figuren nicht gezeigt), insbesondere quer, durch eine Bohrung in ein Strangpressprofil der Seitentür 5 eingesetzt.

Zudem ist den Figuren 1C beziehungsweise 2C jeweils für das erste beziehungsweise zweite Ausführungsbeispiel des Personenkraftwagens 1 zu entnehmen, wie das Seitentürfixierelement 9 und das Karosserieanschlagelement 13 in einer Unfallsituation sich derart aneinander abstützen, insbesondere das Seitentürfixierelement 9 sich an dem Karosserieanschlagelement 13, sodass eine Verlagerung der Seitentür 5 in Kraftwagenhochrichtung z verhindert wird.

Im Folgenden wird das Zusammenwirken von Seitentürfixierelement 9 und Karosserieanschlagelement 13 während beziehungsweise bei einem Seitenanprall auf die Seitentür 5 näher erläutert. Durch einen entsprechend heftigen Anprall eines Kollisionspartners an die Seitentür 5 wird sich diese in Richtung des Fahrzeuginneren, also insbesondere in Richtung eines Fahrgastraums verformen. Durch diese Intrusion der Seitentür 5 wird das in deren unteren Randbereich angeordnet Seitentürfixierelement 9 ein Stück weit in Kraftwagenquerrichtung y verlagert und gleichzeitig aber auch in z-Richtung, also in Kraftwagenhochrichtung, wodurch nach Überbrückung des Höhenabstands z zwischen Seitentürfixierelement 9 und Karosserieanschlagelement 13 das Seitentürfixierelement 9, hier mit einer Anlagekontaktfläche 44,an dem Karosserieanschlagelement 13, hier mit einer Anlagegegenkontaktfläche 33, anschlägt. Dieser Anlagekontaktbereich ist in den Figuren 1C und 2C eingekreist und mit dem Bezugszeichen 21 versehen. Zu erkennen ist auch, dass in dieser Anschlagposition das Seitentürfixierelement 9 auch an der Karosserie 3, hier der jeweiligen Karosseriesäule 4 anliegt und sich auch dort abstützt. Dieser Anlagekontaktbereich ist mit dem Bezugszeichen 23 versehen.

Bei den in den Figuren 1A bis 2C dargestellten Ausführungsbeispielen des erfindungsgemäßen Personenkraftwagens sind die Anlagekontaktfläche 44 des beziehungsweise am Seitentürfixierelement 9 und die Anlagegegenkontaktfläche 33 des beziehungsweise am Karosserieanschlagelement 13 jeweils eben ausgebildet. Die Ausrichtung der Kontaktflächen 33 und 44 zueinander ist parallel oder im Wesentlichen parallel. Des Weiteren ist bei den in den Figuren dargestellten Ausführungsbeispielen vorgesehen, dass die sich jeweils in einer in x- und y-Richtung des Kraftwagenkoordinatensystems aufspannenden, gedachten Ebene liegenden Kontaktflächen 33 und 44 parallel oder im Wesentlichen parallel zu einer gedachten Horizontalen angeordnet sind. Alternativ können die Kontaktflächen 33 und 44 auch schräg zur gedachten Horizontalen angeordnet sein, wobei diese vorzugsweise Richtung der Seitentür geneigt, also in Richtung deren Mitte hin abfallend angeordnet sind. Die Anordnung und Ausgestaltung der Anlagekontaktfläche 44 und der Anlagegegenkontaktfläche 33 ist vorzugsweise in jedem Fall so, dass bei Verlagerung der Anlagekontaktfläche 44 des Seitentürfixierelements 9 infolge einer kollisionsbedingten Verformung der Seitentür in Richtung des Fahrgastraums die Anlagekontaktfläche 44 des Seitentürfixierelements 9 gegen die Anlagegegenkontaktfläche 33 des Karosserieanschlagselement 13 gebracht wird und an dieser - vorzugsweise flächig beziehungsweise vollflächig - anliegt, wie das in den Figuren 1C und 2C dargestellt ist. Bei fortschreitender Intrusion, also Verformung der Seitentür in Richtung des Fahrzeuginneren unter Absorbierung von Teilen der Crashenergie können die Anlagekontaktfläche 44 und die Anlagegegenkontaktfläche 33 aneinander gleiten beziehungsweise abgleiten, das heißt im Besonderen, dass die Anlagekontaktfläche 44 an der sich verformungsbedingt einziehenden Seitentür an der Anlagegegenkontaktfläche 33 abgleiten kann, ohne dass die Seitentür in z-Richtung verlagert wird. Festzuhalten bleibt daher, dass die Anlagekontaktfläche 44 und die Anlagegegenkontaktfläche 33 so ausbildet und angeordnet sind, dass eine Relativbewegung zwischen Seitentür und Kraftwagensäule ermöglicht ist und zwar in x-Richtung des Kraftwagenkoordinatensystems. Die Wegstrecke, um welche diese Relativbewegung stattfinden kann, könnte mittels eines in x-Richtung wirkenden, in den Figuren nicht dargestellten Anschlags begrenzt werden. Dieser ist jedoch - zumindest nicht in allen Fällen - notwendig.

Zusammenfassend bleibt festzuhalten, dass durch das Anschlagen der Seitentür 5 am Karosserieanschlagelement 13 die crashbedingten Bewegung der Seitentür 5 in z-Richtung eingeschränkt wird. Aufgrund dieser Ausgestaltung kann eine Überlastung der Schließöse einer Türschließeinrichtung vermieden und so der Kraftverbund zu den Karosseriesäulen im Schlossbereich erhalten werden. Wichtig ist, dass die beiden Abstützelemente (Seitentürfixierelement 9 und Karosserieanschlagelement 13) erst im Crashfall in Kontakt miteinander gelangen können, sodass diese bei der Montage der Seitentür nicht in irgendeiner Form zueinander eingestellt/ausrichtet werden müssen.

Festzuhalten bleibt noch, dass aufgrund der Überdeckung von Seitentürfixierelement 9 und Karosserieanschlagelement 13 in x-Richtung eine Verformung der Seitentür nach innen zugelassen wird, ohne dass die Seitentür nach oben über den nicht dargestellten, die karosserieseitige Türöffnung begrenzenden Seitenschweller rutschen kann.

## Patentansprüche

1. Personenkraftwagen (1), aufweisend eine Karosserie (3) und mindestens eine zwischen einer Schließstellung und einer Offenstellung bewegbare Seitentür (5), wobei an einem freien Randbereich (7) der mindestens einen Seitentür (5) ein Seitentürfixierelement (9) angeordnet ist,
**dadurch gekennzeichnet, dass**
an einer tragenden Kraftwagensäule der Karosserie (3) ein in Kraftwagenhochrichtung oberhalb des Seitentürfixierelements (9) angeordnetes Karosserieanschlagelement (13) vorgesehen ist, das bei in Schließstellung angeordneter Seitentür (5) in Kraftwagenhochrichtung (z-Richtung) in einem Abstand vom Seitentürfixierelement (9) angeordnet ist, dass das Seitentürfixierelement (9) und das Karosserieanschlagelement (13) in der Schließstellung der Seitentür (5) einen Versatz in Kraftwagenquerrichtung (20) relativ zueinander aufweisen und dass bei einer durch einen Anprall eines Kollisionspartners an die Seitentür (5) bedingten Verformung derselben das Seitentürfixierelement (9) gegen das Karosserieanschlagelement (13) verlagerbar ist.

2. Personenkraftwagen nach Anspruch 1,
**dadurch gekennzeichnet, dass**
bei Verlagerung der unbeschädigten Seitentür (5) zwischen ihrer Schließstellung und Offenstellung das Seitentürfixierelement (9) das Karosserieanschlagelement (13) berührungslos passiert.

3. Personenkraftwagen (1) nach einem der vorhergehenden Ansprüche,
**dadurch gekennzeichnet, dass**
bei einer durch einen Anprall eines Kollisionspartners an die Seitentür (5) bedingten Verformung derselben das Seitentürfixierelement (9) in Kraftwagenquerrichtung in Richtung auf einen Fahrgastraum gegen einen weiteren karosserieseitigen Anschlag verlagerbar ist.

4. Personenkraftwagen (1) nach einem der vorhergehenden Ansprüche,
**dadurch gekennzeichnet, dass**
das Seitentürfixierelement (9) eine Anlagekontaktfläche (44) aufweist, welche durch einen Anprall eines Kollisionspartners an die Seitentür (5) bedingten Verformung derselben gegen eine Anlagegegenkontaktfläche (33) des Karosserieanschlagelements (13) verlagerbar ist, wobei die Anlagekontaktfläche (44) und die Anlagegegenkontaktfläche (33) so ausgebildet sind, dass trotz Anlagekontakt derselben eine Relativbewegung zwischen dem Seitentürfixierelement (9) und dem Karosserieanschlagelement (13) durch ein Abgleiten entlang dieser Kontaktflächen (33, 44) möglich ist.

5. Personenkraftwagen (1) nach einem der vorhergehenden Ansprüche,
**dadurch gekennzeichnet, dass**
bei dem Seitentürfixierelement (9) und dem Karosserieanschlagelement (13) sich jeweils um ein passives Fixierelement und Anschlagelement handelt.

6. Personenkraftwagen (1) nach einem der vorhergehenden Ansprüche,
**dadurch gekennzeichnet, dass**
das Seitentürfixierelement (9) an einem unteren Eckbereich der Seitentür (5) und das korrespondierende Karosserieanschlagelement (13) entsprechend an einem Säulenfuß (23) Kraftwagensäule angeordnet ist.

7. Personenkraftwagen (1) nach einem der vorhergehenden Ansprüche,
**dadurch gekennzeichnet, dass**
das Karosserieanschlagelement (13) als Scharnierelement oder an einem Scharnierelement, insbesondere unteres Scharnierelement, der Seitentür (5) ausgebildet ist.

## Claims

1. Passenger car (1), comprising a body (3) and at least one side door (5) movable between a closed position and an open position, a side door fixing element (9) being arranged on a free edge region (7) of the at least one side door (5),
**characterized in that**
a body stop element (13) arranged above the side door fixing element (9) in the vertical direction of the motor vehicle is provided on a load-bearing motor vehicle pillar of the body (3), which body stop element is arranged at a distance from the side door fixing element (9) in the vertical direction of the motor vehicle (z-direction) when the side door (5) is in the closed position, **in that** the side door fixing element (9) and the body stop element (13) have an offset relative to one another in the transverse direction (20) of the motor vehicle when the side door (5) is in the closed position, **and in that** the side door fixing element (9) can be displaced against the body stop element (13) in the event of a deformation of the side door due to an impact of a collision partner on the side door (5).

2. Passenger car according to claim 1,
**characterized in that**
when the undamaged side door (5) is moved between the closed position and the open position thereof, the side door fixing element (9) passes by the body stop element (13) without contact.

3. Passenger car (1) according to either of the preceding claims,
**characterized in that**
the side door fixing element (9) can be displaced in the transverse direction of the motor vehicle in the direction of a passenger compartment against another stop on the body side in the event of a deformation of the side door (5) due to an impact of a collision partner on the side door.

4. Passenger car (1) according to any of the preceding claims,
**characterized in that**
the side door fixing element (9) has a contact surface (44) which can be displaced against a counter-contact surface (33) of the body stop element (13) deformation of the side door due to an impact of a collision partner against said side door (5), the contact surface (44) and the counter-contact surface (33) being designed such that, despite contact between them, a relative movement between the side door fixing element (9) and the body stop element (13) is possible by sliding along these contact surfaces (33, 44).

5. Passenger car (1) according to any of the preceding claims,
**characterized in that**
the side door fixing element (9) and the body stop element (13) are a passive fixing element and a stop element, respectively.

6. Passenger car (1) according to any of the preceding claims,
**characterized in that**
the side door fixing element (9) is arranged on a lower corner region of the side door (5) and the corresponding body stop element (13) is arranged accordingly on a pillar base (23) of the motor vehicle pillar.

7. Passenger car (1) according to any of the preceding claims,
**characterized in that**
the body stop element (13) is designed as a hinge element or on a hinge element, in particular a lower hinge element, of the side door (5).

## Revendications

1. Véhicule particulier (1), présentant une carrosserie (3) et au moins une porte latérale (5) mobile entre une position fermée et une position ouverte, dans lequel un élément de fixation de porte latérale (9) est disposé au niveau d'une zone de bord libre (7) de l'au moins une porte latérale (5),
**caractérisé en ce que**
un élément de butée de carrosserie (13) disposé au-dessus de l'élément de fixation de porte latérale (9) dans la direction de la hauteur de véhicule est prévu sur un montant porteur de véhicule de la carrosserie (3), lequel élément de butée de carrosserie est disposé à une certaine distance de l'élément de fixation de porte latérale (9) dans la direction de la hauteur de véhicule (direction z) lorsque la porte latérale (5) est disposée dans la position fermée, **en ce que** l'élément de fixation de porte latérale (9) et l'élément de butée de carrosserie (13) présentent, dans la position fermée de la porte latérale (5), un décalage l'un par rapport à l'autre dans la direction transversale de véhicule (20), **et en ce que,** lors d'une déformation de ladite porte latérale due à un choc d'un partenaire de collision contre la porte latérale (5), l'élément de fixation de porte latérale (9) peut être déplacé contre l'élément de butée de carrosserie (13).

2. Véhicule particulier selon la revendication 1,
**caractérisé en ce que**
lors du déplacement de la porte latérale (5) non endommagée entre sa position fermée et sa position ouverte, l'élément de fixation de porte latérale (9) passe sans contact l'élément de butée de la carrosserie (13).

3. Véhicule particulier (1) selon l'une des revendications précédentes,
**caractérisé en ce que**
lors d'une déformation de ladite porte latérale due à un choc d'un partenaire de collision contre la porte latérale (5), l'élément de fixation de porte latérale (9) peut être déplacé dans la direction transversale de véhicule en direction d'un habitacle contre une autre butée côté carrosserie.

4. Véhicule particulier (1) selon l'une des revendications précédentes,
**caractérisé en ce que**
l'élément de fixation de porte latérale (9) présente une surface de contact d'appui (44) qui peut être déplacée contre une contre-surface de contact d'appui (33) de l'élément de butée de carrosserie (13) par une déformation de ladite porte latérale due à un impact d'un partenaire de collision contre la porte latérale (5), dans lequel la surface de contact d'appui (44) et la contre-surface de contact d'appui (33) sont réalisées de sorte que, malgré le contact d'appui de celles-ci, un mouvement relatif entre l'élément de fixation de porte latérale (9) et l'élément de butée de carrosserie (13) est possible par un glissement le long desdites surfaces de contact (33, 44).

5. Véhicule particulier (1) selon l'une des revendications précédentes,
**caractérisé en ce que**
l'élément de fixation de porte latérale (9) et l'élément de butée de carrosserie (13) sont respectivement un élément de fixation et un élément de butée passifs.

6. Véhicule particulier (1) selon l'une des revendications précédentes,
**caractérisé en ce que**
l'élément de fixation de porte latérale (9) est disposé sur une zone de coin inférieure de la porte latérale (5) et l'élément de butée de carrosserie (13) correspondant est disposé de manière correspondante sur un pied de montant (23) d'un montant de véhicule.

7. Véhicule particulier (1) selon l'une des revendications précédentes,
**caractérisé en ce que**
l'élément de butée de carrosserie (13) est réalisé comme un élément de charnière ou sur un élément de charnière, en particulier un élément de charnière inférieur, de la porte latérale (5).
